# EUROPÄISCHE PATENTANMELDUNG

(11) **EP 2 947 613 A1**
(43) Veröffentlichungstag der Anmeldung: **25.11.2015**
(21) Anmeldenummer: 15168002.2
(22) Anmeldetag: 18.05.2015
(51) Int. Cl.: G06Q 10/08

(54) **VERFAHREN FÜR EIN ZUSTELLEN EINER POSTSENDUNG; DATENBANK ZUR UNTERSTÜTZUNG DES ZUSTELLVERFAHRENS; EIN DATENTRÄGER FÜR DAS AB- UND/ODER ABLESEN EINER IDENTIFIKATIONSNUMMER, EIN SYSTEM FÜR DAS ZUSTELLEN EINER POSTSENDUNG, EIN COMPUTERPROGRAMM UND EIN COMPUTERPROGRAMMPRODUKT**

(30) Priorität: 21.05.2014 DE 102014209698
(71) Anmelder: Deutsche Telekom AG, 53113 Bonn (DE)
(72) Erfinder: Uhlenbrock, Detlev, 89073 Ulm (DE)
(74) Vertreter: Schwöbel, Thilo K.

(57) **Zusammenfassung**

Verfahren zum Zustellen einer Postsendung durch einen Logistikdienstleister,
-- wobei in einem ersten Verfahrensschritt dem Empfänger der Postsendung eine Identifikationsnummer zugeordnet wird,
-- wobei in einem zweiten Verfahrensschritt einem Identifikationsnummer-Verwalter die Identifikationsnummer zusammen mit einer Zusatzinformation in einer Datenbank gespeichert bereitgestellt wird, wobei eine Sekundäradresse von der Zusatzinformation umfasst wird,
-- wobei in einem dritten Verfahrensschritt einem Zusteller des Logistikdienstleisters die Identifikationsnummer bereitgestellt wird,
-- wobei in einem vierten Verfahrensschritt bei einem fehlgeschlagenen Zustellversuch der Postsendung an eine Primäradresse die Identifikationsnummer vom Zusteller zum Identifikationsnummer-Verwalter übermittelt wird,
-- wobei in einem fünften Verfahrensschritt die Zusatzinformation vom Identifikationsnummer-Verwalter zum Zusteller übermittelt wird und
-- wobei in einem sechsten Verfahrensschritt die Postsendung an die Sekundäradresse durch den Zusteller zugestellt wird

## Beschreibung

### Stand der Technik

Die vorliegende Erfindung betrifft ein Zustellverfahren für ein Zustellen einer Postsendung, eine Datenbank zur Unterstützung des Zustellverfahrens, ein Datenträger für das Ab- und/oder Ablesen einer Identifikationsnummer, ein System für das Zustellen eine Postsendung, ein Computerprogramm sowie ein Computerprogrammprodukt.

Ist die Zustellung einer Postsendung, wie beispielsweise eines Briefs oder eines Pakets, durch einen Zusteller nicht möglich, so wird gegenwärtig versucht, die Sendung bei einem Nachbarn abzugeben, die Sendung an verschiedenen Orten zu hinterlegen oder die Sendung wird vom Zusteller in einer Filiale bzw. in einer Packstation eines Logistikdienstleisters hinterlegt. Oftmals wird auch versucht, durch eine Zweit- oder Drittzustellung die Postsendung auszuliefern. Die Hinterlegung an einem vereinbarten Ort, wie beispielsweise an einer Garage, erfolgt in Absprache zwischen einem Empfänger und einem bestimmten Logistikdienstleister. Typischerweise wird der Empfänger von verschiedenen Logistikdienstleister durch die dazugehörigen Zusteller beliefert, mit denen jeweils eine Absprache möglich ist. Für den Empfänger bedeutet das, dass er seine Postsendungen von verschiedenen Zustellern über jeweils verschiedene Wege erhält.

Aus Sicht des Empfängers gibt es kein einheitliches Verfahren, das unabhängig vom Logistikunternehmer oder Zusteller ist. Dadurch entsteht ein unerwünschter Mehraufwand für den Empfänger, um an seine Postsendung zu gelangen. Beispielsweise werden unterschiedliche Sendungen an verschiedenen Orten, insbesondere in der Nachbarschaft, hinterlegt und der Empfänger ist gezwungen, die einzelnen Orte aufzusuchen, um seine Pakete zu erhalten. Weiterhin ist die Anzahl der Ein- bzw. Zweipersonenhaushalte stetig am Steigen und die Wahrscheinlichkeit den Empfänger tagsüber bzw. zu üblichen Zustellzeiten anzutreffen sinkt. Gleichzeitig steigen die Internetnutzung in privaten Haushalten und die Einkäufe privater Haushalte über das Internet (E-Commerce). Das führt unweigerlich zur Erhöhung der Anzahl von Postsendungen, wodurch eine Zustellquote für das erfolgreiche Erstzustellen von Postsendungen weiter verschlechtert wird. Mit sinkender Zustellquote muss auch mehr Platz in Filialen der Logistikdienstleister für die nichtzugestellten Postsendungen zur Verfügung gestellt werden.

Es ist Aufgabe der vorliegenden Erfindung ein Verfahren zur Verfügung zu stellen, mit dem im Vergleich zu denen aus dem Stand der Technik bekannten Verfahren die Zustellquote beim Versenden von Postsendungen an einen Empfänger durch einen Zusteller verbessert wird.

### Offenbarung der Erfindung

Die vorliegende Erfindung löst die Aufgabe durch ein Verfahren zum Zustellen einer Postsendung durch einen Logistikdienstleister,
-- wobei in einem ersten Verfahrensschritt dem Empfänger der Postsendung eine Identifikationsnummer zugeordnet wird,
-- wobei in einem zweiten Verfahrensschritt einem Identifikationsnummer-Verwalter die Identifikationsnummer zusammen mit einer Zusatzinformation in einer Datenbank gespeichert bereitgestellt wird, wobei eine Sekundäradresse von der Zusatzinformation umfasst wird,
-- wobei in einem dritten Verfahrensschritt einem Zusteller des Logistikdienstleisters die Identifikationsnummer bereitgestellt wird,
-- wobei in einem vierten Verfahrensschritt bei einem fehlgeschlagenen Zustellversuch der Postsendung an eine Primäradresse die Identifikationsnummer vom Zusteller zum Identifikationsnummer-Verwalter übermittelt wird,
-- wobei in einem fünften Verfahrensschritt die Zusatzinformation vom Identifikationsnummer-Verwalter zum Zusteller übermittelt wird und
-- wobei in einem sechsten Verfahrensschritt die Postsendung an die Sekundäradresse durch den Zusteller zugestellt wird.

Gegenüber dem Stand der Technik hat das erfindungsgemäße Verfahren den Vorteil, dass der Zusteller unkompliziert die ihm bereitgestellte Identifikationsnummer an den Identifikationsnummer-Verwalter übermittelt und im Gegenzug die Zusatzinformationen mit der Sekundäradresse erhält, zu der er die Postsendung liefern kann. Insbesondere kann die Sekundäradresse so gewählt werden, dass die Chancen für eine erfolgreiche Zustellung zu einem Zustellzeitpunkt, d. h. zu einem Zeitpunkt zu dem die Zustellung vorgesehen ist, erhöht werden. Dabei ist es denkbar, dass beispielsweise als Sekundäradresse eine Adresse angegeben wird, an der sich der Empfänger bevorzugt aufhält, wenn er sich nicht an der Primäradresse aufhält. Dadurch lässt sich die Wahrscheinlichkeit für eine erfolgreiche Zustellung erhöhen. Vorzugsweise ist die Sekundäradresse in der Nachbarschaft zu der Primäradresse gelegen.

Vorzugsweise ist es dabei vorgesehen, dass die Identifikationsnummer eineindeutig dem Empfänger zugeordnet ist. Weiterhin ist es vorgesehen, dass die Identifikationsnummer keinerlei persönliche Information beinhaltet. Denkbar ist auch, dass dem Zusteller kenntlich gemacht wird, ob ein Empfänger eine Identifikationsnummer besitzt oder nicht. Dem Fachmann ist darüber hinaus, dass die Nutzung der Datenbank durch den IdentifikationsnummerVerwalter nicht zwangsläufig deren Generierung voraussetzt. Beispielsweise ist es auch denkbar, dass die Datenbank von einem Dritten generiert wird und anschließend vom Identifikationsnummer-Verwalter genutzt wird. Weiterhin ist es vorgesehen, dass der Identifikationsnummer-Verwalter als Vermittler zwischen Empfänger und Logistikdienstleister und insbesondere als Verwalter genutzt wird, um die Zustellquote zu erhöhen. Dabei ist es auch denkbar, dass eine Vielzahl von Zusatzinformationen zusammen mit der Identifikationsnummer gespeichert in der Datenbank zur Verfügung gestellt wird. Insbesondere ist es dann vorgehsehen, abhängig von Tageszeit und/oder Wochentag eine favorisierte Zusatzinformation vom Empfänger gewählt wird, wobei die zum Zustellzeitpunkt aktuell favorisierte Zusatzinformation dann im fünften Verfahrensschritt an den Zusteller übermittelt wird. Dadurch lassen sich die Kenntnisse und Erfahrungen des Empfängers positiv für eine Verbesserung der Zustellquote nutzen.

Vorteilhafte Ausgestaltungen und Weiterbildungen der Erfindung sind den Unteransprüchen, sowie der Beschreibung unter Bezugnahme auf die Zeichnungen entnehmbar.

In einer weiteren Ausführungsform der vorliegenden Erfindung ist es vorgesehen, dass im zweiten Verfahrensschritt die Identifikationsnummer für eine Vielzahl unterschiedlicher Logistikdienstleister vom Identifikationsnummer-Verwalter verwendet wird. Dadurch wird in vorteilhafter Weise nur eine Identifikationsnummer benötigt, die der Empfänger zu verwalten bzw. zu pflegen hat. Außerdem lässt es sich dadurch bewirken, dass die Postsendungen von unterschiedlichen Logistikdienstleistern an eine gemeinsame Sekundäradresse geliefert werden und der Empfänger entsprechend nicht mehrere Nachbarn aufsuchen muss, um seine Postsendungen einzusammeln. Dadurch wird die Zustellung der Postsendung auf der Empfängerseite positiverweise vereinfach.

In einer weiteren Ausführungsform der vorliegenden Erfindung ist es vorgesehen, dass in einem siebten Verfahrensschritt dem Empfänger vom Identifikationsnummer-Verwalter eine Mitteilung
-- über den fehlgeschlagenen Zustellversuch der Postsendung an die Primäradresse,
-- über einen weiteren fehlgeschlagenen Zustellversuch der Postsendung an die Sekundäradresse und/oder
-- über einen erfolgreichen Zustellversuch der Postsendung an die Sekundäradresse übermittelt wird. Dadurch wird der Empfänger in vorteilhafter Weise über den Status seiner Sendung informiert. Dabei ist es vorstellbar, dass der Empfänger die vom Identifikationsnummer-verwalter erhaltene Information zur Erhöhung der Zustellquote nutzt, indem er beispielsweise seinerseits seine Anwesenheit oder die eines Anderen an der Sekundäradresse sicherstellt.

In einer weiteren Ausführungsform der vorliegenden Erfindung ist es vorgesehen, dass
-- die Sekundäradresse und/oder
-- eine Telefonnummer
   eines alternativen Empfängers von der Zusatzinformation umfasst wird. Beispielsweise handelt es sich bei dem alternativen Empfänger um einen Nachbarn des Empfängers. Weiterhin ist es vorstellbar, dass eine Email-Adresse oder ein andere Hilfsmittel zur Kontaktaufnahme von der Zusatzinformation umfasst wird. Dadurch kann der Zusteller den alternativen Empfänger in vorteilhafter Weise kontaktieren, um beispielsweise sein Anwesenheit an der Sekundäradresse zu prüfen oder um sich anzukündigen.

In einer weiteren Ausführungsform der vorliegenden Erfindung ist es vorgesehen, dass im sechsten Verfahrensschritt die Postsendung dem alternativen Empfänger an der Sekundäradresse zugestellt wird. Dadurch wird die Postsendung für dem Empfänger beim alternativen Empfänger zwischengelagert, bevor der Empfänger die Postsendung beim alternativen Empfänger abholen kann. Folglich ist der Empfänger in positiver Weise nicht nur an die Öffnungszeiten einer Filiale des Logistikdienstleisters gebunden sondern der Logistikunternehmer ist zudem nicht notwendiger Weise dazu gezwungen seine Lagerräume zu erweitern um die steigende Anzahl an nichtzugestellten Postsendungen lagern zu können. Dadurch kann die Nutzung des Identifikationsnummer-Verwalters zu einer "win-win-Situation" zwischen Logistikdienstleister und Empfänger beitragen.

In einer weiteren Ausführungsform der vorliegenden Erfindung ist es vorgesehen, dass in einem achten Verfahrensschritt die Zusatzinformation beim Identifikationsnummer-Verwalter vom Empfänger verändert und/ oder eine gewünschte Zusatzinformation aus einem Satz an Zusatzinformationen vom Empfänger ausgewählt wird. Insbesondere ist es vorgesehen, dass der Empfänger aktiv Einfluss nimmt auf die Zusatzinformation nimmt, um beispielsweise während einer Abwesenheit des alternativen Empfängers für einen adäquaten Ersatz in Form eines weiteren alternativen Empfängers zu sorgen. Es ist auch denkbar, dass der Empfänger die Zusatzinformation bestimmt bzw. verändert, wenn er vom Identifikationsnummer-Verwalter über den fehlgeschlagenen Zustellversuch an die Primäradresse informiert wird. Dadurch lässt ich möglichst flexibel und spontan eine Sekundäradresse für den Zusteller festlegen, die eine möglichst hohe Erfolgsaussicht für ein erfolgreiches Zustellen der Postsendung an der Sekundäradresse hat, wobei in vorteilhafter Weise auf einen Kenntnisstand des Empfängers zurückgegriffen wird, der dem Zusteller in der Regel nicht vorliegt.

In einer weiteren Ausführungsform ist es vorgesehen, dass als Identifikationsnummer eine lesbare Nummer und/oder ein zweidimensionaler Code verwendet wird. Beispielsweise handelt es sich um eine Buchstabend- und/oder Zahlenkombination, die an der Primäradresse hinterlegt ist. Insbesondere ist es vorstellbar, dass die Identifikationsnummer elektronisch auslesbar ist. Beispielsweise wird die Identifikationsnummer dem Zusteller mit Hilfe eines Datenträgers zur Verfügung gestellt, wobei der Datenträger mit einem Transponder bzw. Datenträgerlesegerät des Zustellers auslesbar ist. Insbesondere wird der Datenträger an der Primäradresse versteckt bzw. nicht augenscheinlich hinterlegt, um den optischen Eindruck der Primäradresse nicht negativ zu beeinträchtigen. Vorzugsweise ist der Datenträger an einer Tür, einem Klingelschild oder einem Briefkasten angebracht. Dabei ist es denkbar, dass die Identifikationsnummer in verschiedenen Formen zum Ab- und/oder Auslesen angebracht ist, um ein Ab- und/oder Auslesen der Identifikationsnummer durch eine Vielzahl an Logistikdienstleister zu gestatten. Weiterhin ist es denkbar, dass das Datenträgerlesegerät einen Speicher umfasst, in dem die einmal abgerufenen Zusatzinformationen für die jeweilige Identifikationsnummer gespeichert wird. In einem solchen Szenario ist es dann möglich bei einer erneuten Zustellung an die Primäradresse lediglich zu prüfen ob sich die Zusatzinformation seit der letzten fehlgeschlagenen Zustellung geändert hat. Dadurch lässt sich die Menge an zu übertragenen Daten reduzieren, indem auf die andernfalls aufwendige wiederholte Übermittelung der bereits bekannten Zusatzinformation verzichtet werden kann. Zudem wird dir Möglichkeit zum Missbrauch durch Fremde reduziert, die die Identifikationsnummer an den Identifikationsnummer-Verwalter schicken.

In einer weiteren Ausführungsform der vorliegende Erfindung ist es vorgesehen, dass in einem ersten Vorbereitungsschritt
-- die Identifikationsnummer an der Primäradresse für den Zusteller hinterlegt wird und/oder
-- die Identifikationsnummer an der Postsendung für den Zusteller angebracht wird. Vorzugsweise wird dazu einem Sender der Postsendung die Identifikationsnummer übermittelt wird, der die Identifikationsnummer an der Postsendung anbringt. Insbesondere ist es vorgesehen, dass die Identifikationsnummer als Adresszusatz auf der Postsendung angebracht wird.

In einer weiteren Ausführungsform der vorliegenden Erfindung ist es vorgesehen, dass die Identifikationsnummer vom Identifikationsnummer-Verwalter in einem ersten Verwaltungsschritt eindeutig für den Empfänger generiert wird und/oder in einem zweiten Verwaltungsschritt eine Einverständniserklärung vom alternativen Empfänger zum IdentifikationsnummerVerwalter gesendet wird. Vorzugsweise wird. Mit Hilfe der Einverständniserklärung wird in vorteilhafter Weise sichergestellt wird, dass der alternative Empfänger sich auch bereiterklärt ein solcher alternativer Empfänger zu sein.

In einer weiteren Ausführungsform der vorliegenden Erfindung ist es vorgesehen, dass im dritten Verwaltungsschritt dem Empfänger der Sendung die Identifikationsnummer bereitgestellt wird. Dadurch wird dem Empfänger die Verwaltung seine Identifikationsnummer überlassen, der dann entscheiden kann in welcher Form er die Identifikationsnummer dem Zusteller bereitstellen möchte. Dadurch lässt sich das Verfahren individuell an die Wünsche des jeweiligen Empfängers anpassen. Weiterhin ist es vorgesehen, dass die Identifikationsnummer erst übermittelt wird, sobald die Einverständniserklärung des alternativen Empfängers dem Identifikationsnummer-verwalter übermittelt wurde. Insbesondere wird eine weitere Mitteilung an den alternativen Empfänger übermittelt, die den alternativen Empfänger über den Beginn seiner Funktion als alternativer Empfänger in Kenntnis setzt. Insbesondere wird der alternative Empfänger auch darüber in Kenntnis gesetzt, wenn seine Funktion als alternativer Empfänger beendet ist oder kurzfristig außer Kraft gesetzt wurde.

Ein weiterer Gegenstand der vorliegenden Erfindung ist eine Datenbank zur Unterstützung eines Zustellverfahrens zum Zustellen einer Postsendung, wobei die Datenbank eine Identifikationsnummer für ein erfindungsgemäßes Verfahren verwaltet.

Ein weiterer Gegenstand der vorliegenden Erfindung ist ein Datenträger für eine Identifikationsnummer, wobei mit dem Datenträger ein erfindungsgemäßes Verfahren durchführbar ist.

Ein weiterer Gegenstand der vorliegenden Erfindung ist ein System aus einem Datenträger und einer Datenbank, wobei mit dem Datenträger ein erfindungsgemäßes Verfahren durchführbar ist.

Ein weiterer Gegenstand der vorliegenden Erfindung ist ein Computerprogramm mit Programmcodemitteln, mit deren Hilfe alle Schritte eines erfindungsgemäßen Verfahrens durchführbar sind, wenn das Computerprogramm auf einer programmierbaren Einrichtung oder einem System zum Zustellen einer Postsendung durch ein Logistikdienstleister ausgeführt wird.

Ein weiterer Gegenstand der vorliegende Erfindung ist ein Computerprogrammprodukt mit einem computerlesbaren Medium und einem auf dem computerlesbaren Medium gespeicherten Computerprogramm mit Programmcodemitteln, die dazu geeignet sind, dass alle Schritte eines erfindungsgemäß Verfahrens durchführbar sind, wenn das Computerprogramm auf einer programmierbaren Einrichtung oder einem System zum Zustellen einer Postsendung durch ein Logistikdienstleister ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsform der Erfindung, welche den Erfindungsgedanken nicht einschränken.

### Kurze Beschreibung der Figuren

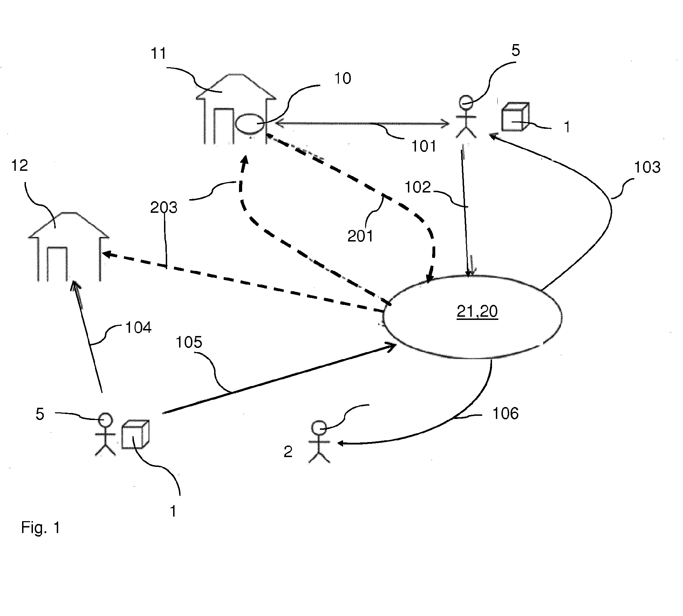

Die **Figur 1** zeigt ein Zustellverfahren für ein Zustellen einer Postsendung gemäß einer beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

In **Figur 1** wird ein Zustellverfahren für ein Zustellen einer Postsendung 1 gemäß einer beispielhaften Ausführungsform der vorliegenden Erfindung dargestellt. Es ist dabei vorgesehen, dass eine Postsendung 1, beispielsweise ein Brief oder ein Paket, durch ein Logistikdienstleister in Form eines Zustellers 5 einem vorgesehenen Empfänger 2 an einer Primäradresse 11 übergeben werden soll. Dazu wird dem Logistikdienstleister vom Sender die Postsendung 1 zum Transport überlassen bzw. übermittelt, woraufhin der Logistikunternehmer dafür sorgt, dass die Postsendung 1 weitergeleitet wird bis schließlich der Zusteller 5, insbesondere ein Post und/oder Paketzusteller, damit betraut wird, die Zustellung an den Empfänger 2 abzuschließen, indem er die Postsendung 1 an die Primäradresse 11 liefert und dem Empfänger 2, vorzugsweise persönlich, die Postsendung 1 übergibt (siehe erste Linie 101). Es erweist sich hierbei oftmals als hinderlich, dass die Arbeitszeiten der Empfänger 2 mit einer Zustellzeit, d. h. der Zeit in der die Postsendung 1 zugestellt werden soll, übereinfallen. Das führt dazu, dass der Zusteller 5 den Empfänger 2 an der Primäradresse 1 nicht antrifft und folglich die Postsendung 1 nicht zustellen kann. Die Zustellung der Postsendung 1 erfolgt dann regelmäßig in einer Zweit-oder Drittzustellung, durch Selbstabholung oder Abholung durch einen Dritten an einem definierten Lagerraum, beispielsweise einer Filiale oder Packstation des Logistikunternehmers.

Um auf solche zeit- und kostaufwendigen Anschlussverfahren bei der Zustellung der Postsendung 1 zu verzichten, ist es vorgesehen, dass die Postsendung einem alternativen Empfänger, wie beispielsweise einem Nachbar oder einem Geschäft in der Nachbarschaft, an einer Sekundäradresse 12 zugestellt wird. Dabei ist es insbesondere vorgesehen, dass der Zusteller 5 bei der Wahl des alternativen Empfängers bzw. der Sekundäradresse eine Identifikationsnummer 10 nutzt. Die Identifikationsnummer 10 wird vorzugsweise in einem ersten Verfahrensschritt eineindeutig dem Empfänger 2 der Postsendung 1 zugeordnet und wird in einem zweiten Verfahrensschritt zusammen mit einer Zusatzinformation 10 von einem Identifikationsnummer-Verwalter 21 in einer Datenbank 20 verwaltet, insbesondere in der Datenbank 20 abrufbar gespeichert. Vorzugsweise umfasst die Zusatzinformation die Sekundäradresse 12 des alternativen Empfängers. Es ist aber auch denkbar, dass die Zusatzinformation eine email-Adresse und/oder eine Telefonnummer zur Kontaktaufnahme des Zustellers 5 mit dem alternativen Empfänger bereitstellt. Um an die Zusatzinformation zu gelangen, ist es vorgesehen, dass dem Zusteller 5 die Identifikationsnummer in einem dritten Verfahrensschritt bereitgestellt wird und diese in einem vierten Verfahrensschritt vom Zusteller 5 an den Identifikationsnummer-Verwalter 21 bei einem fehlgeschlagenen Zustellversuch übermittelt wird. Beispielsweise wird die Identifikationsnummer 10 als zweidimensionaler Code, insbesondere als Barcode, als Zahlen- und/oder Buchstabenkombination, beispielsweise an einem Briefkasten oder einer Türklingel angebracht und so dem Zusteller 5 bereitgestellt wird. Denkbar ist auch, dass die Identifikationsnummer 10 in Form eines elektronisch auslesbaren Datenträgers an der Primäradresse hinterlegt ist. Vorzugsweise verfügt der Zusteller 5 dann über einen Transponder, mit dem er den Datenträger elektronisch auslesen kann. Weiterhin ist es vorstellbar, dass die Identifikationsnummer 10 auf der Postsendung 10 angebracht und dem Zusteller 5 so bereitgestellt wird, wobei in einem solchen Szenario dem Sender der Postsendung 1 die Identifikationsnummer 10 zeitlich vor dem Versenden der Postsendung 10 zugestellt wird. Es ist dem Fachmann klar, dass die Identifikationsnummer 10 nicht auf eine Zahlenkombination beschränkt ist, sondern auch in jeder optisch oder haptisch erfassbaren Form als elektrisch auslesbaren oder nichtauslesbaren Datenträger dem Zusteller 5 an der Primäradresse oder auf der Postsendung 1 bereitgestellt werden kann.

Um diese Identifikationsnummer 10 erfindungsgemäß nutzen zu können, ist es vorgesehen, dass die Identifikationsnummer 10, vorzugsweise vom Identifikationsnummer-Verwalter 21, dem Empfänger 2 eineindeutig zugeordnet wird. Insbesondere beantragt der Empfänger 2 der Postsendung 1 in einem ersten Verwaltungsschritt 201 eine Identifikationsnummer 10, woraufhin die Identifikationsnummer 10 generiert wird. Insbesondere bezieht sich die Identifikationsnummer 10 nur auf den Empfänger 2 und beinhaltet keinerlei weitere Informationen. Für das Eintragen der Identifikationsnummer 1 in die Datenbank 20 werden dann neben persönlichen Daten, wie beispielsweise Name und Adresse des Empfängers 2, und Ergänzungsinformationen, wie beispielsweise email-Adresse oder Telefonnummer des Empfängers 2, sowie die Zusatzinformation an den Identifikationsnummer-Verwalter 21 gesendet und vorzugsweise dort hinterlegt und gespeichert. Zusätzlich wird dem Identifikationsnummer-Verwalter 21 eine Einverständniserklärung vom alternativen Empfänger übermittelt, wobei die Einverständniserklärung im Wesentlichen die Bereitschaft des alternativen Empfängers signalisiert, als alternativer Empfänger zur Verfügung zu stehen. In einem dritten Verfahrensschritt 203 wird
-- eine Mitteilung an den Empfänger gesendet, die den Empfänger 2 über seine erfolgreiche Integration in die Datenbank 20 des Identifikationsnummer-Verwalters 21 in Kenntnis setzt und/oder
-- eine weitere Mitteilung an den alternativen Empfänger gesendet wird, die den alternativen Empfänger darüber in Kenntnis setzt, dass er als alternativer Empfänger in der Datenbank 20 integriert ist.

Weiterhin ist es hierbei vorgesehen, dass bei einem fehlgeschlagenen Zustellversuch der Zusteller 5 die Identifikationsnummer 10 an den Identifikationsnummer-Verwalter 21 übersendet (siehe zweite Linie 102) und anschließend der Identifikationsnummer-Verwalter 21 mittels der Datenbank 20 die Zusatzinformation ermittelt und dieser Zusatzinformation an den Zusteller 5 weiterleitet (siehe dritte Linie 103). Der Zusteller 5 kann dann die neu gewonnene Zusatzinformation dazu nutzen, die Postsendung 1 dem alternativen Empfänger in einem sechsten Verfahrensschritt erfolgreich zuzustellen (siehe vierte Linie 104). Weiterhin ist es vorgesehen, dass bei einer erfolgreichen Zustellung der Postsendung 1 an den alternativen Empfänger der Zusteller 5 eine Mitteilung an den Identifikationsnummer-Verwalter 21 übermittelt (siehe fünfte Linie 105), mit der der Zusteller 5 den IdentifikationsnummerVerwalter 21 über die erfolgreiche Zustellung der Postsendung 1 informiert. Weiterhin ist es denkbar, dass in einem siebten Verfahrensschritt der Identifikationsnummer-Verwalter 21 dem Empfänger 2 eine Mitteilung über das erfolgreiche Zustellen der Postsendung 1 an den alternativen Empfänger übermittelt (siehe sechste Linie 106).

Weiterhin ist es vorstellbar, dass für eine Identifikationsnummer 10 eine Vielzahl von verschiedenen alternativen Empfängern mit einer jeweils dazugehörigen Zusatzinformation vom Identifikationsnummer-Verwalter 21 verwaltet wird. Es ist dabei denkbar, dass der Empfänger 2 aus der Vielzahl an verschiedenen alternativen Empfängern einen alternativen Empfänger auswählt, dessen Zusatzinformation an den Zusteller 5 übermittelt wird. Beispielweise wird der aus der Vielzahl an alternativen Empfängern ausgewählte alternative Empfänger vom Empfänger 2, unmittelbar nachdem er über den fehlgeschlagenen Zustellversuch in Kenntnis gesetzt wurde, ausgewählt. Insbesondere ist es vorgesehen, dass der Empfänger 2 eine Mitteilung an den Identifikationsnummer-Verwalter 21 sendet, mit der der Empfänger 2 den alternativen Empfänger festlegt. Anschließend wird die entsprechende Zusatzinformation an den Zusteller 5 weitergeleitet. In einem solchen Szenario ist es weiterhin vorgesehen, dass ein favorisierter alternativer Empfänger automatisch vom IdentifikationsnummerVerwalter 21 ausgewählt wird, sobald der Empfänger 2 innerhalb eines festgelegten Zeitintervalls nicht antwortet bzw. den alternativen Empfänger nicht aktiv festlegt. Weiterhin ist es denkbar, dass der Empfänger 2 den alternativen Empfänger abhängig vom Zustellzeitpunkt auswählt. Beispielsweise wechseln die alternativen Empfänger in Abhängigkeit vom Wochentag und/oder der Tageszeit. Dadurch lässt sich die Wahrscheinlichkeit für eine erfolgreiche Zustellung an den alternativen Empfänger weiter erhöhen.

Weiterhin ist es denkbar, dass der Empfänger 2 selbst der alternative Empfänger mit einer von der Primäradresse 11 abweichenden Sekundäradresse 12 ist. Beispielsweise wird als Sekundäradresse 12 eine Geschäftsadresse verwendet und der Empfänger erhält seine Postsendung 1 durch die Zustellung der Postsendung 1 an die Geschäftsstelle.

Weiterhin ist es vorgesehen, dass der Identifikationsnummer-Verwalter 21 von einer Vielzahl an unterschiedlichen Logistikdienstleistern genutzt wird. In einem solchen Szenario benötigt der Empfänger nur eine Identifikationsnummer 10 und kann mit dieser einen Identifikationsnummer 10 den Vorteil der erfindungsgemäßen Zustellung für verschiedene Logistikdienstleister in Anspruch nehmen.

## Patentansprüche

1. Verfahren zum Zustellen einer Postsendung (1) durch einen Logistikdienstleister,
-- wobei in einem ersten Verfahrensschritt dem Empfänger (2) der Postsendung (1) eine Identifikationsnummer (10) zugeordnet wird,
-- wobei in einem zweiten Verfahrensschritt einem Identifikationsnummer-Verwalter (21) die Identifikationsnummer (10) zusammen mit einer Zusatzinformation in einer Datenbank (20) gespeichert bereitgestellt wird, wobei eine Sekundäradresse (12) von der Zusatzinformation umfasst wird,
-- wobei in einem dritten Verfahrensschritt einem Zusteller (5) des Logistikdienstleisters die Identifikationsnummer (10) bereitgestellt wird,
-- wobei in einem vierten Verfahrensschritt bei einem fehlgeschlagenen Zustellversuch der Postsendung (1) an eine Primäradresse (11) die Identifikationsnummer (10) vom Zusteller (5) zum Identifikationsnummer-Verwalter (21) übermittelt wird,
-- wobei in einem fünften Verfahrensschritt die Zusatzinformation vom Identifikationsnummer-Verwalter (21) zum Zusteller (5) übermittelt wird und
-- wobei in einem sechsten Verfahrensschritt die Postsendung (1) an die Sekundäradresse (12) durch den Zusteller (5) zugestellt wird.

2. Verfahren gemäß Anspruch 1, wobei im zweiten Verfahrensschritt die Identifikationsnummer (10) für eine Vielzahl unterschiedlicher Logistikdienstleister vom Identifikationsnummer-Verwalter (21) verwendet wird.

3. Verfahren gemäß einem der vorhergehenden Ansprüche, wobei in einem siebten Verfahrensschritt dem Empfänger (2) vom Identifikationsnummer-Verwalter (21) eine Mitteilung
-- über den fehlgeschlagenen Zustellversuch der Postsendung (10) an die Primäradresse (11),
-- über einen weiteren fehlgeschlagenen Zustellversuch der Postsendung (10) an die Sekundäradresse (12) und/oder
-- über einen erfolgreichen Zustellversuch der Postsendung (10) an die Sekundäradresse (12)
übermittelt wird.

4. Verfahren gemäß einem der vorhergehenden Ansprüche, wobei
-- die Sekundäradresse (12) und/oder
-- eine Telefonnummer
eines alternativen Empfängers von der Zusatzinformation umfasst wird.

5. Verfahren gemäß einem der vorhergehenden Ansprüche, wobei im sechsten Verfahrensschritt die Postsendung (1) dem alternativen Empfänger an der Sekundäradresse (12) zugestellt wird.

6. Verfahren gemäß einem der vorhergehenden Ansprüche, wobei in einem achten Verfahrensschritt die Zusatzinformation beim Identifikationsnummer -Verwalter (21) vom Empfänger (2) verändert und/ oder eine gewünschte Zusatzinformation aus einem Satz an Zusatzinformationen vom Empfänger (2) ausgewählt wird.

7. Verfahren gemäß einem der vorhergehenden Ansprüche, wobei als Identifikationsnummer (10) eine lesbare Nummer und/oder ein zweidimensionaler Code verwendet wird.

8. Verfahren gemäß einem der vorhergehenden Ansprüche, wobei in einem ersten Vorbereitungsschritt
-- die Identifikationsnummer (10) an der Primäradresse (11) für den Zusteller (5) hinterlegt wird und/oder
-- die Identifikationsnummer (10) an der Postsendung (1) für den Zusteller (5) angebracht wird.

9. Verfahren gemäß einem der vorhergehenden Ansprüche, wobei die Identifikationsnummer (10) vom Identifikationsnummer-Verwalter (21) in einem ersten Verwaltungsschritt eindeutig für den Empfänger (2) generiert wird und/oder in einem zweiten Verwaltungsschritt eine Einverständniserklärung vom alternativen Empfänger (2) zum Identifikationsnummer-Verwalter (21) gesendet wird.

10. Verfahren gemäß einem der vorhergehenden Ansprüche, wobei im dritten Verwaltungsschritt dem Empfänger (2) der Sendung die Identifikationsnummer (10) bereitgestellt wird.

11. Datenbank (20) zur Unterstützung eines Zustellverfahrens zum Zustellen einer Postsendung (1), wobei mit der Datenbank (20) ein Verfahren gemäß einem der Ansprüche 1 bis 10 durchführbar ist.

12. Datenträger für eine Identifikationsnummer (10), wobei mit dem Datenträger ein Verfahren gemäß einem der Ansprüche 1 bis 10 durchführbar ist.

13. System aus einem Datenträger und einer Datenbank (20), wobei der Datenträger zum Ab- und/oder Auslesen einer Identifikationsnummer (10) genutzt wird, wobei auf dem Datenträger die Identifikationsnummer (10) zusammen mit einer Zusatzinformation gespeichert wird, wobei mit dem System aus Datenträger und Datenbank ein Verfahren gemäß einem der Ansprüche 1 bis 10 durchführbar ist.

14. Computerprogramm mit Programmcodemitteln, mit deren Hilfe alle Schritte eines Verfahrens nach einem der Ansprüche 1 bis 10 durchführbar sind, wenn das Computerprogramm auf einer programmierbaren Einrichtung oder einem System zum Zustellen einer Postsendung (1) durch ein Logistikdienstleister ausgeführt wird.

15. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 10 durchführbar sind, wenn das Computerprogramm auf einer programmierbaren Einrichtung oder einem System zum Zustellen einer Postsendung (1) durch ein Logistikdienstleister ausgeführt wird.
